# EUROPEAN PATENT SPECIFICATION

(11) **EP 3 683 157 B1**
(45) Date of publication and mention of the grant of the patent: **28.07.2021**
(21) Application number: 20152697.7
(22) Date of filing: 20.01.2020
(51) Int. Cl.: B65D 1/26, B65D 85/804

(54) **STACKABLE CUP FOR PRODUCING A BEVERAGE CAPSULE AND METHOD FOR STACKING**
STAPELBARER BEHÄLTER FÜR FERTIGUNG EINE GETRÄNKEKAPSEL UND VERFAHREN ZUM STAPELN
RECIPIENT EMPILABLE POUR LA PRODUCTION D'UNE CAPSULE DE BOISSON ET PROCÉDÉ D'EMPILER

(30) Priority: 21.01.2019 NL 2022424; 25.07.2019 NL 2023569
(43) Date of publication of application: 22.07.2020
(73) Proprietor: Euro-Caps Holding BV, 3047 AL Rotterdam (NL)
(72) Inventor: HELD, Micha Alexander, 3047 AL Rotterdam (NL)
(74) Representative: EP&C

(56) References cited:
- WO-A1-2011/117768
- WO-A1-2012/080501
- WO-A1-2017/025622
- US-A1- 2013 129 872

## Description

The present invention relates to a stackable cup for producing a beverage capsule. The invention further relates to a method for stacking cups, to a capsule for brewing a beverage, to a method for the manufacturing of a capsule and to a brewing assembly.

Similar cups are known in the field and generally comprise a side wall and a flange. An interior of the cup is defined by the side wall, which is configured to hold a beverage ingredient, such as ground coffee. The annular flange comprises an opening, which allows access to the interior of the cup and is configured to receive a foil to substantially close-off the interior. For transporting the cups, prior to receipt of the beverage ingredient and the foil, the cups are stacked in order to reduce the amount of occupied volume and to increase the transport efficiency.

In US2013/129872 A1, stackable cups are disclosed. The cups have grooves in the side wall, which reinforce the base of the cup, near the annular flange. It is disclosed in this prior art document that the grooves also allow for easy and robust stacking of the cups.

The grooves of these prior art cups, however, have the disadvantage that they inwardly protrude the side wall of the cup. The presence of the grooves therefore reduces the volume of the interior of the cup and thus reduces the amount of beverage ingredient that can be held by the cup.

It is therefore an object of the invention to provide a stackable cup, which allows for more convenient stacking and unstacking, and which has an interior with an increased volume, compared to the known stackable cup. It is at least an object of the invention to provide an alternative cup.

The present invention provides a stackable cup for producing a beverage capsule, comprising:
a side wall, extending between a bottom end and a top end, and
a flange, which is arranged at the top end of the side wall,
wherein the side wall defines an interior of the cup, and wherein the flange defines an opening towards the interior of the cup, characterized in that the cup comprises:
   a plurality of deformable stacking notches, which outwardly protrude from an outer surface of the side wall,
   wherein the notches are inwardly deformable to a deformed state, upon introduction of a radially inward force, and wherein the notches are, in the deformed state, substantially flush with the outer surface of the side wall.

Similar as the known cups, does the cup according to the present invention comprise a side wall and a flange. The side wall may be disposed around a central axis of the cup, which extends in an axial direction of the cup between the bottom end of the cup and the top end thereof. The flange is arranged at the top end of the cup and is preferably integrally formed with the side wall. The flange defines an opening towards the interior of the cup, and may receive a foil to close-off the opening and to seal the interior of the cup. At its bottom end, the cup may be closed-off, but in an embodiment, the cup may comprise a second opening at its bottom end, which may also be closed-off with a foil.

The cup according to the present invention further comprises a plurality of stacking notches, which are arranged on an outer surface of the side wall. The stacking notches are preferably arranged adjacent the flange and outwardly protrude with respect to the side wall. With outwardly protruding, it is meant that the notches are set radially outward with respect to a nominal radius of the side wall. The nominal radius may be defined as the radius of a cup that does not comprise any stacking notches. This nominal radius is similar to the radius of the side wall at nominal portions of the side wall, in between the stacking notches. The stacking notches may thus have a larger radius than the nominal portions of the side wall, in between the notches.

With the notches of the cup according to the present invention, it may be provided that the side walls of stacked cups will not contact each other. As such, a certain amount of free play remains present between the stacked cups, which allows for convenient unstacking of the stacked cups.

The notches may be deformed from their non-deformed state, being the state that is described above, towards a deformed state. The notches may be deformed by a radially inward force that is applied onto them, which forces the notches in a radially inward direction. The notches thereby become arranged substantially flush with the outer surface of the side wall. In this application, substantially flush means that the notches no longer project radially outwards from the side wall of the cup in the deformed state. For example, when the side wall has a mainly frustoconical outer surface, the notches will substantially not project, in the deformed state, radially outwards of the frustoconical outer surface.

Upon deformation of the notches, the side wall adjacent the notches may undergo a deformation under the influence of the radially inward force. The side wall thereby deforms, which may cause the notches to move radially inward. Here, the notches may be relatively rigid, compared to the side wall, so that they may retain their shape. Alternatively, the notches may also deform themselves, in order to reduce amount of deformation that is required from the side wall.

Alternatively or additionally, the notches themselves may inwardly deform, whereas the nominal portions of the cup may remain non-deformed. The notches may thereby undergo a kind of buckling deformation, which provides that the notches no longer outwardly protrude from the side wall.

In the non-deformed state, the stacking notches form a surface on which subsequent cups may be stacked. The notches of a lower cup are thereby configured to receive the flange of an upper cup, such that the upper cup comes to rest on the lower cup in a stacked configuration. A remaining portion of the side wall of the lower cup, other than the notches, does not come in contact with the side wall of the upper cup. The absence of contact between the side walls of the cups therefore significantly reduces the frictional forces between the cups, when they are arranged in a stacked configuration, which allows for more convenient unstacking of the cups.

In the non-deformed state of the cup, the nominal portions of the side wall, in between the notches, do not comprise any grooves and do not inwardly protrude into the interior of the cup. The cup according to the invention therefore has an increased volume with respect to the cup with grooves that is known from prior art. The cup according to the invention may even have an interior with a larger volume than that of a conventional cup without grooves and notches, since the notches of the inventive cup may have a hollow interior at their inner surfaces, facing the interior of the cup, which may also be filled with the beverage ingredient.

The cup according to the present invention is configured to receive the beverage ingredient in its interior and to receive a foil on its annular flange, in order to produce a beverage capsule therewith. The beverage ingredient may, for example, be ground coffee, such that the resulting beverage capsule is a coffee capsule, which comprises ground coffee. The resulting coffee capsule may, for example, be a Nespresso® capsule or a Nespresso®-compatible capsule.

In an embodiment, the notches are adapted to be inwardly deformed by an inner wall of a brewing chamber of a brewing apparatus. The cup may thereby be introduced in a brewing chamber of brewing apparatus, preferably when it is filled with the beverage ingredient and closed-off with the foil, and the brewing apparatus may be configured to extract a beverage from the beverage ingredient.

The nominal portions of the side wall of the cup may have a shape that substantially corresponds to the shape of the inner wall of the brewing chamber. The notches outwardly protrude from the nominal portions and are adapted to be inwardly deformed by the inner wall of the brewing chamber when the cup were to be inserted in the brewing chamber. The notches are thereby adapted to be inwardly deformed under the influence of the inner wall of the brewing chamber, such that they become substantially flush with the outer surface of the side wall, and such that the outer wall of the cup substantially corresponds with the wall of the brewing chamber as well.

The notches of the cup are mainly used for the stacking of the cups and may no longer be needed after the cups have been filled and sealed to form the capsules. In the brewing chamber, the notches are deformed by the inner wall of the brewing chamber, such that they do not hinder the brewing process in the brewing apparatus. This provides that the cups according to the present invention, comprising the outwardly protruding notches in their non-deformed state, can be used in a brewing apparatus that is intended for conventional cups that lack grooves or notches.

In an embodiment of the cup, the notches have an outer surface that projects away in a radially outward direction with respect to the outer surface of the side wall. The outer surface of the notches is set at a distance with respect to the nominal portions of the side wall, such that the radius of the cup is larger at the notches as compared the radius of the cup at the nominal portions.

In an additional embodiment, the notches have a wedge-like shape, and the outer surface of the notches is, with increasing distance from the flange, set further away from the outer surface of the side wall. The length of the notches may, for example, be in the range between 5% and 25% of the height of the cup, in between the top end and the bottom end. In this embodiment, the distance between the side wall at the nominal portions of the cup and the outer surface of the notches increases along the length of the notches.

In an embodiment, the side wall of the cup has an at least partial frustoconical shape. The side wall is thereby tapered along at least a portion in its axial direction. The frustoconical shape of the side wall contributes to the stacking of the cups, and allows that the side wall of a lower cup may be inserted in the interior of an upper cup that is stacked on the lower cup.

In a further embodiment, the notches are provided at the frustoconical portion of the side wall. The notches thereby outwardly protrude from the frustoconical portion, such that the flange of a subsequent cup may be moved over the frustoconical portion and that the flange thereafter comes to rest on the notches, and preferably on the step surfaces of the notches.

In a further embodiment, an outer diameter of the cup, around the notches, is substantially constant over the length of the notches. In this embodiment, the outer surfaces of the notches extend parallel to the axial direction of the cup and are aligned perpendicular to the plane in which the flange is provided.

However, in an alternative embodiment of the cup, the outer diameter of the cup, around the notches, increases along the length of the notches. The diameter adjacent the step surfaces may thereby be larger than the diameter adjacent the flange, such that the notch widens from the top of the cup in a direction towards the bottom of the cup. The outer surfaces of the notches may, for example, be aligned at an angle in the range between 0° and 5° with respect to the axial direction of the cup.

By providing this angle, the notches may comprise an undercut during their forming, which may provide for wider notches and for an increased rigidity of the stacked cups.

In an embodiment of the cup, each of the notches comprises a step surface, which faces away from the flange and which is set at an angle with respect to a plane of the flange, wherein the angle may be in the range between -10° and 10°. The plane of the flange may be the plane in which the flange extends, which is aligned perpendicular to the central axis of the cup. The step surface preferably faces towards the bottom end of the cup and is configured to receive the flange of a subsequent cup, which may be stacked on the cup.

In this embodiment, the step surfaces of the notches may be aligned at a relatively small angle with respect to the flange of the cup. This small angle may for example be in the range between 1° and 10°. This small angle may result in more convenient deformation of the notches and for a lower required radially inward force.

The step surfaces may also be aligned parallel to the flange of the cup. When such a cup were to be positioned on a horizontal surface with its flange, the step surfaces of the notches may be aligned parallel to the horizontal plane as well.

In an embodiment of the cup, an outer diameter of the cup, around the notches and adjacent the step surfaces, is substantially larger than a diameter of the opening at the top end of the cup. This difference in diameter allows that the flange of an upper cup has an opening with a diameter that is smaller than the diameter of the notches of a lower cup. Upon stacking the upper cup on the lower cup, the flange of the upper cup therefore comes to rest on the notches of the lower cup.

In an embodiment, the flange comprises an annular recess, which faces towards the opening and which is configured to rest on notches of another cup when the cup is stacked on this other cup. The recess is set inwardly with respect to the flange and may thereby provide for more rigid stacking, since the notches of a lower cup will be arranged in the annular recess. An interlocking effect may occur between the notches and the recess, which may prevent the stacked cups from shifting with respect to each other in a plane perpendicular to their central axis.

In a further embodiment, the cup has an outer diameter, around the notches and adjacent the step surfaces, which is substantially smaller than a diameter of the annular recess and which is substantially larger than the diameter of the opening at the top end of the cup. The notches of the cup are at their step surfaces thereby wider than the opening, allowing an upper cup to rest on the step surfaces of the notches of a lower cup, but are narrower than the annular recess in the flange, allowing the notches of the lower cup to fall within the recess of the upper cup.

In an embodiment, the notches are evenly distributed around the circumference of the side wall. The distribution provides that the spacing between the notches, and the width of the nominal portions in between the notches, is the same around the circumference of the cup. This may provide for an even distribution of the forces when the cups are stacked on each other, but also provides for an even force distribution during the deforming of the notches, since the radially inward forces are then applied evenly around the circumference of the cup.

In an embodiment, each of the notches comprises two sides, which are located opposite to each other. The sides have a curved shape and taper towards nominal portions of the side wall. Seen in a tangential direction of the cup, around the central axis, and with respect to the radius of the nominal portions of the cup. a top end of the notches first follows a curved contour with increasing radius, then follows a straight contour with constant radius and then again follows a curved contour with decreasing radius.

The outer surface of the notches may taper with respect to the central axis of the cup. As such, a diameter of the cup around the notches is smaller at its top portion, directly adjacent the flange, than at its bottom portion, which faces away from the flange. This taper of the notches may provide a main contribution to the strength of the notches during stacking of multiple cups.

The taper may result in an undercut during the forming of the cup. Additionally, the notches may be curved in the tangential direction, following the curvature of the side wall of the cup.

Each of the notches may further comprise a tilted step surface at their respective bottom sides, which is aligned at a non-perpendicular angle with the central axis. The tilted step surface may provide the advantage of having further improved deformation of the stacking notches in a brewing apparatus and may contribute to improved loosening of the cup from the forming mould.

The sides of the notches have a tapered shape and may be mirror images of each other. The sides taper from being relatively wide to being relatively narrow next to the nominal portions of the side wall. In an embodiment, the step surfaces of the sides may extend parallel to each other. A top end of each of the notches, opposite to the step surface, may have a tapered shape at the respective sides.

The tapered sides provide an additional contribution to the strength of the notches during stacking. Additionally, the taper at the sides provides for better inward deformation of the notches, since the transition between the notch and the nominal portion of the side wall is gradual, rather than being abrupt. Furthermore, the tapered sides provide for further improved loosening from the forming mold, despite the undercut being present.

In an embodiment, the cup comprises three notches, which are evenly distributed around the circumference of the side wall, being spaced at 120° from each other. With three notches, the stacking of the cups may be substantially robust and the relative position between the stacked cups may be safeguarded in six degrees of freedom.

Furthermore, the three notches provide for even further improved loosening from the forming mold. This is caused by the fact that each notch faces a nominal portion of the side wall and does not have a diametrically opposed notch. Upon deforming of the cup with the undercut, during loosening from the forming mold, each of the deformed notches does not have an opposing notch that is deformed in the opposite direction. As such, the required force for deforming the notches and for loosening the cup is reduced.

In a further embodiment of the cup, each of the stacking notches has a width in the tangential direction and the nominal portions of the side wall, in between the notches, also have a width in the tangential direction, e.g. a spacing between adjacent notches. Seen in the tangential direction of the cup, the spacing between adjacent notches is larger than the width of the notches themselves. This difference in width provides that, at the height of the notches, the part of the circumference formed by the notches is smaller than the part of the circumference that is formed by the nominal portions of the side wall. As such, the cup may be loosened from the forming mold more easily.

In a further embodiment of the cup, all notches have a same width and all notches are spaced at the same width as well.

The present invention further provides a method for stacking cups, which comprises the steps of:
- providing a first stackable cup as described above,
- providing a second stackable cup as described above, and
- stacking the first cup on the second cup in order to form a stacked configuration,
wherein, in the stacked configuration of the cups, the side wall of the second cup is arranged at least partially within the interior of the first cup, and the flange of the first cup rests on the notches of the second cup.

With the method according to the invention, a first cup is stacked on a second cup, such that they together form a stacked configuration. For the stacking of the caps, preferably, the second cup is arranged on a plane with its flange, in which the cup is in an upside-down orientation. The top end of the second cup thereby rests on the plane, whereas the bottom end of the second cup is faces away from the plane.

The first cup is in a similar upside-down orientation as the second cup and the top end of the first cup is brought over the bottom end of the second cup, in order to stack the cups. The bottom end of the second, lower cup thereby enters the interior of the first, upper cup, which is stacked on the second cup. The first, upper cup thereby ends up to rest on the notches of the second, lower cup with its flange. In an embodiment of the method, the stacking may be repeated with further cups.

In an embodiment of the method, the flange of the first cup comprises an annular recess, which faces towards the opening in the first cup. The annular recess of the first cup rests, in the stacked configuration of the cups, on the notches of the second cup.

The annular recess thereby has a diameter that is larger than the outer diameter of the cup, around the notches and adjacent the step surfaces. It is thereby provided that the flange of the first, upper cup falls around the notches of the second, lower cup and that the first, upper cup comes to rest on the notches of the second, lower cup by means of its annular recess.

The present invention further provides a capsule for brewing a beverage, comprising:
a stackable cup as described above,
a beverage ingredient, which is arranged in the interior of the cup, and
a foil, which is arranged on the flange and which is configured to cover the opening of the cup and to seal the interior of the cup.

The capsule according to the present invention is adapted to be used for brewing a beverage in a brewing apparatus. The capsule comprises a cup according to the present invention, of which the interior is filled with a beverage ingredient. The beverage ingredient may, for example, be ground coffee, such that the capsule becomes suitable for brewing coffee, upon extraction of the ground coffee in the cup.

The capsule further comprises a foil, which is arranged on the flange and which closes the interior of the cup, in order to hold the beverage ingredient in the interior of the cup. For brewing the beverage, the foil may be penetrated to allow water to flow into the interior of the cup, in order to extract the beverage from the beverage ingredient.

Preferably, the capsule is a coffee capsule that comprises ground coffee in the interior of the cup. The coffee capsule according to the invention may, for example, be a Nespresso® capsule or a Nespresso®-compatible capsule.

The present invention further provides a method for the manufacturing of a capsule, which comprises the steps of:
- providing at least two stackable cups as described above, which are in a stacked configuration,
- unstacking at least one cup of the stacked cups,
- filling the interior of the at least one cup with a beverage ingredient, and
- arranging a foil on the flange of the at least one cup to cover the opening of the at least one cup and to seal the interior of the at least one cup.

For the manufacturing of the capsule, first, the stacked cups are unstacked, so that they may be handled individually. The interiors of the individual cups are then filled with the beverage ingredient. For this method, at least one of the stacked cups may be unstacked and filled with the beverage ingredient. Preferably, the cups are thereto held such, that the bottom portions of the cups face in a downward direction and that the openings at the top portions of the cups face in an opposing upward direction, in order allow for receipt of the beverage ingredient through the opening.

After the beverage ingredient has been brought in the interior of the at least one cup, the interior of the cup is sealed by arranging the foil on the flange. The beverage ingredient is thereby held in the interior of the cup and is, due to the sealing with the foil, prevented from getting into contact with possible ambient disturbances, such as oxygen.

The cups may be closed-off at their bottom ends, or may, in an alternative embodiment, comprise second openings at their bottom ends. In an embodiment, the method for the manufacturing further comprises the step of providing a foil over the second opening at the bottom end of the cup, in order to close-off of the second opening in the cup and to seal the interior of the cup.

The present invention further provides a brewing assembly, which comprises:
a brewing apparatus, comprising a brewing chamber, and
a capsule as described above,
wherein the brewing chamber has an inner wall that substantially corresponds to the side wall of the cup, wherein the brewing chamber is configured to receive the capsule for brewing a beverage, and wherein the inner wall of the brewing chamber is, upon introduction of the capsule in the brewing chamber, configured to inwardly deform the notches of the cup to the deformed state.

The brewing apparatus is configured to brew a beverage by means of the capsule and the beverage ingredient in the interior of the cup. The brewing apparatus of the brewing assembly may, for example, be a Nespresso® brewing apparatus or may at least be configured to brew coffee from Nespresso® capsules or Nespresso®-compatible capsules.

The capsule is configured to be inserted in the brewing chamber of the brewing apparatus, such that the side wall of the cup is arranged within the brewing chamber. The inner wall of the brewing chamber substantially corresponds to the side wall of the cup and the inner wall is, upon insertion of the cup, configured to inwardly deform the notches of the cup.

The notches of the cup are only used for the stacking of the cups and may no longer be needed after the cups have been filled and sealed. In the brewing chamber, the notches are deformed by the inner wall of the brewing chamber, such that they do not hinder the brewing process in the brewing apparatus. This provides that the cups according to the present invention, comprising the outwardly protruding notches in their non-deformed state, can be used in a brewing apparatus that is intended for conventional cups that lack grooves or notches.

After the notches of the cup have been deformed by the inner wall of the brewing chamber, the notches have become arranged substantially flush with the side wall of the cup. The shape of the cup with the inwardly deformed notches thereby substantially corresponds to the inner wall of the brewing chamber, which may provide for a better sealing of the capsule in the brewing chamber and may therefore provide for an improved quality of the brewed beverage.

Further characteristics of the invention will be explained below, with reference to embodiments, which are displayed in the appended drawings, in which:
Figure 1a depicts an embodiment of the cup according to the present invention,
Figure 1b depicts a cross-sectional view on the cup of figure 1a,
Figure 2a depicts multiple cups, which are arranged in a stacked configuration,
Figure 2b depicts a cross-sectional view on the stacked configuration of figure 2a,
Figure 2c depicts a close-up view on another embodiment of a stacked configuration with multiple cups,
Figure 3a depicts a cross-sectional view on a capsule and a brewing chamber of a brewing apparatus, in which the cup is in a non-deformed state,
Figure 3b depicts the cross-sectional view on the capsule and the brewing chamber, in which the cup is in a deformed state,
Figure 3c depicts a view on the cup of the capsule, which is in the deformed state,
Figure 4a depicts another embodiment of the cup according to the present invention,
Figure 4b depicts a front view on the cup of figure 4a,
Figure 4c depicts a side view on the cup of figure 4a,
Figure 5a depicts multiple of the cups of figure 4a, which are arranged in a stacked configuration, and
Figure 5b depicts a cross-sectional view on the stacked configuration of figure 5a.

Throughout the figures, the same reference numerals are used to refer to corresponding components or to components that have a corresponding function.

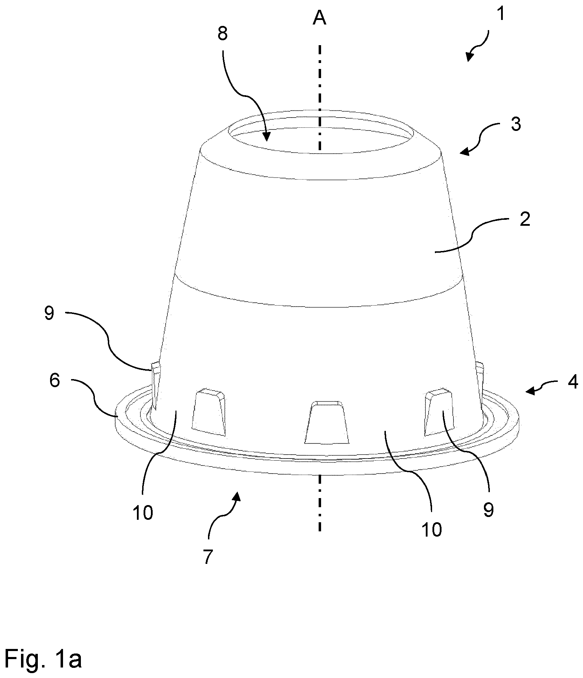

Figure 1a schematically depicts an embodiment of the cup according to the present invention, to which is referred with reference numeral 1. The cup 1 comprises a side wall 2, which extends between a bottom end 3 of the cup 1 and a top end 4 of the cup 1. The side wall 2 encircles a central axis (A) of the cup 1, which extends in an axial direction between the bottom end 3 and the top end 4. The side wall 2 defines an interior 5 of the cup 1, which is configured to hold a beverage ingredient.

The cup 1 comprises a flange 6, which is arranged at the top end 4 of the cup 1 and which is integrally connected to the side wall 2. The flange 6 also encircles the central axis (A) of the cup 1 and is arranged concentrically with the side wall 2. In the present embodiment, the cup 1 is manufactured by means of an injection moulding process, whereby the side wall 2 is integrally formed with the flange 6. Alternatively, the cup may as well be manufactured by means of a thermoforming process.

The flange 6 of the cup 1 is provided in a plane, which is at least in the orientation in the figures a horizontal plane. The plane extends perpendicular to the central axis (A) of the cup 1. At the top end 4 of the cup 1, the flange 6 defines an opening 7, which is defined in the plane as well. The opening 7 is concentric with the flange 6 and has a diameter (D).

The side wall 2 tapers from the top end 4 to the bottom end 3 and has a frustoconical shape. This allows the top end 4' of an upper cup 1' to be moved over the bottom end 3 of a lower cup 1, in order to bring the cups in a stacked configuration. The bottom end 3 of the lower cup 1 is thereby inserted into the interior 5' of the upper cup 1', through the opening 6' in the upper cup 1'.

At its bottom end 3, the cup 1 comprises a second opening 8, which also provides access to the interior 5 of the cup 1. The second opening 8 is also provided in a plane perpendicular to the central axis (A) of the cup 1.

The side wall 2 of the cup 1 comprises a plurality of deformable stacking notches 9, which are evenly disposed around the circumference of the side wall 2 and which are arranged adjacent the top end 4 of the cup 1.

The stacking notches 9 protrude from an outer surface of the side wall 2 in a radially outward direction (R), which is aligned radially with respect to the central axis (A). The stacking notches 9 in particular protrude from nominal portions 10 of the side wall 2, wherein the nominal portions 10 are defined in between the stacking notches 9. The nominal portions 10 thereby form a continuation of the side wall 2 and have a shape that corresponds to the side wall of a conventional cup that has no stacking notches.

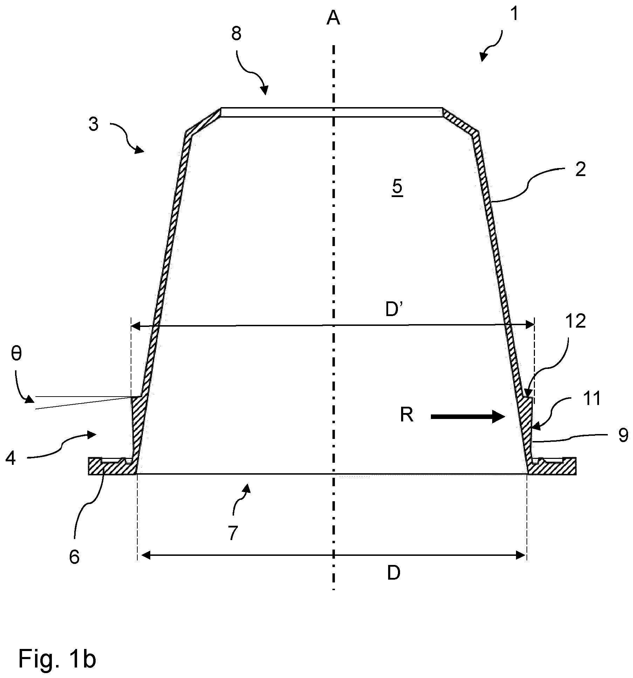

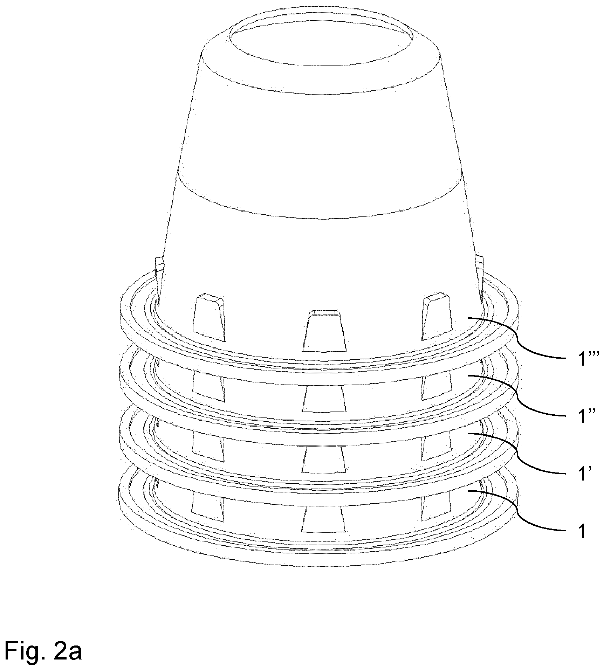

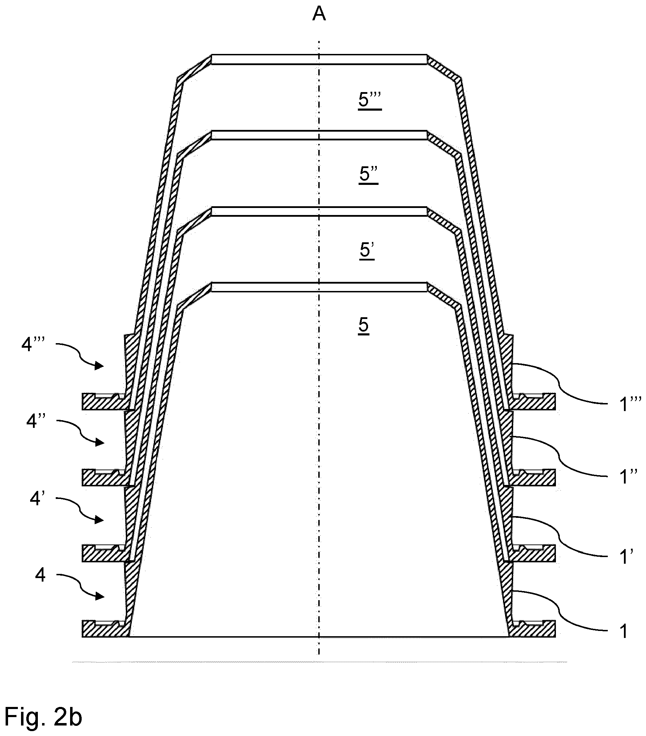

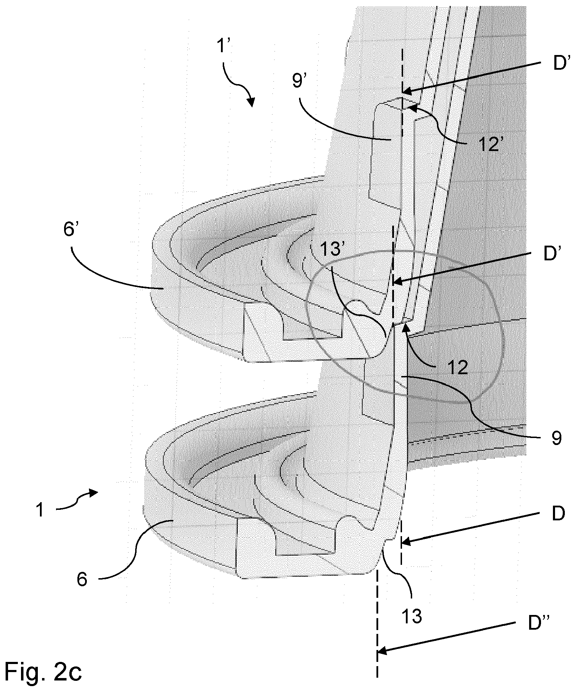

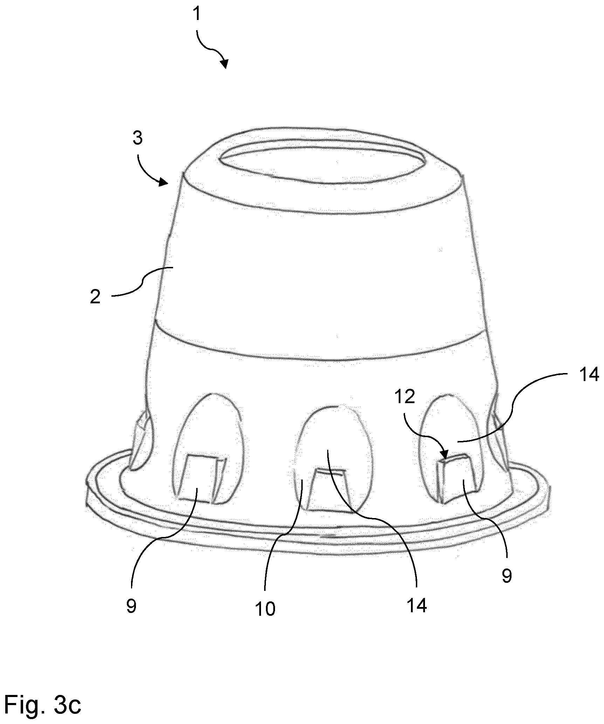

In figures 1 and 2, the stacking notches 9 are displayed in a non-deformed state, in which they outwardly protrude from the nominal portions 10. The stacking notches 9 are deformable by a radially inward force, towards a deformed state, as is displayed in figure 3c. In the deformed state, the stacking notches 9 no longer outwardly protrude from the outer surface of the side wall 2. In the deformed state, the stacking notches 9 are substantially flush with the side wall 2, i.e. do not project radially outwards from the annular wall 2, and substantially flush with the surrounding nominal portions 10 of the side wall 2.

The stacking notches 9 have a wedge-like shape and taper with respect to the nominal portions 10 of the side wall 2. With increasing distance from the flange 6, the outer surface 11 of the stacking notches 9 is set further away from the outer surface of the side wall 2 and from the nominal portions 10.

In the present embodiment, the stacking notches 9 have outer surfaces 11, which are set at an angle with respect to the central axis (A) and with respect to the radially outward direction (R). A diameter (D') of the cup 1, measured between outer surfaces 11 of the stacking notches 9, increases along the length of the stacking notches 9, wherein the length of the stacking notches 9 is measured substantially parallel to the central axis (A). The diameter (D') increases from adjacent the flange 6 in the direction towards the bottom 3 of the cup 1, and the cup 1 outwardly widens. In the present embodiment, the notches 9 widen at an angle of 4° with respect to the central axis (A) of the cup 1, but in alternative embodiments according to the present invention, the notches may widen at other angles, for example in the range between 0° and 5°.

The stacking notches 9 further comprise a step surface 12, which faces away from the flange 6 and which faces towards the bottom end 3 of the cup 1. The step surfaces 12 are set at an angle (θ) with respect to the plane in which the flange 6 is arranged. In the present embodiment, the angle (θ) is relatively small, for example in the range between 0° and 10°, and may result in more convenient deformation of the notches and for a lower required radially inward force.

The diameter (D) of the opening 7 at the top end 4 of the cup 1 is smaller than the diameter (D') between the stacking notches 9 of the cup 1, but the diameter (D) is larger than the diameter of the cup 1 between the nominal portions 10. When the cups 1 are stacked, as is schematically displayed in figures 2a and 2b, the flange 6 of an upper cup comes to rest on the step surfaces 12 of the stacking notches 9 of a lower cup. The bottom end 3 of a lower cup is thereby arranged in an interior 5 of an upper cup, extending through the opening 7 in the flange 6 of the upper cup.

In this stacked configuration, the stacked cups 1 contact each other between adjacent flanges and stacking notches, but there will be no contact between the side walls of the stacked cups 1. As such, large frictional forces between the side walls 2 of the cups 1 are prevented, so that the unstacking of the cups 1 may be more convenient.

In figure 2c, an alternative embodiment is displayed of an upper cup 1' that is stacked on a lower cup 1. The cups in figure 2c have a flange 6 that comprises an annular recess 13, which faces towards the opening 7 that is defined by the flange 6. The annular recess 13 is aligned concentrically with the flange 6 and with the opening 7 that is defined therein. The annular recess 13 has a diameter (D") that is larger than the diameter (D) of the opening 7.

It has already been mentioned above that the diameter (D') between the outer surfaces 11 of the stacking notches 9 is larger than the diameter (D) of the opening 7 in the cup 1, such that the upper cup 1' rests with its flange 6' on the step surfaces 12 of the stacking notches 9 of the lower cup 1. Furthermore, the diameter (D') between the outer surfaces 11 of the stacking notches 9 is smaller than the diameter (D") of the annular recess 13, such that, upon stacking of the cups, the step surface 12 of the lower cup 1 falls within the annular recess 13' of the upper cup 1'.

A more rigid stacking of the cups may be achieved by the notches 9 of the lower cup 1 that are arranged in the annular recess 13' of the upper cup 1'. An interlocking effect may occur between the notches 9 and the recess 13', which will prevent the stacked cups from shifting with respect to each other in a plane perpendicular to the central axis (A) of the cups.

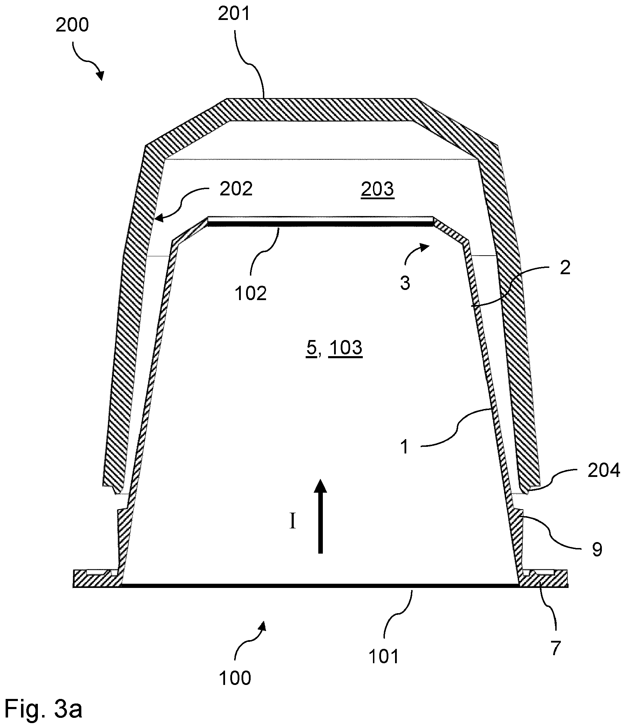

The stacking notches 9 are adapted to be deformed by an inner wall of a brewing chamber of a brewing apparatus. In figure 3a, an embodiment of a brewing assembly is displayed. The brewing assembly comprises a capsule according to the present invention, to which is referred with reference numeral 100. The capsule 100 comprises a cup 1 with stacking notches 9 and a foil 101, which is arranged on the flange 6 of the cup 1. The foil 101 covers the opening 7 in the cup 1 and seals the interior 5 of the cup 1 with respect to the surroundings. At the bottom end 3 of the cup 1, a second foil 102 is provided to cover the second opening 8 in the cup and to seal the interior 5 at the bottom end 3.

The capsule 100 comprises a beverage ingredient 103 in the interior 5 of the cup 1. In the present embodiment, the capsule is a coffee capsule 100 and the beverage ingredient is ground coffee 103. In an alternative embodiment, the beverage ingredient of the capsule may be any other ingredient that can be used for the brewing of a beverage.

Figure 3a further displays a brewing chamber 201 of a brewing apparatus 200 of the brewing assembly. The brewing apparatus 200 is configured to brew a beverage from the beverage ingredient in the capsule. In the present embodiment, the brewing apparatus is a coffee brewer 200, which is configured to brew coffee from the ground coffee 103 in the coffee capsule 100 by means of an extraction process. The coffee brewer 200 according to the present embodiment is configured to brew coffee from Nespresso® capsules or Nespresso®-compatible capsules.

The brewing chamber 201 comprises an inner wall 202 by which an interior 203 of the brewing chamber 201 is defined. The brewing chamber 201 is configured to receive the capsule 100 in its interior 203, whereby the bottom end 3 of the cup 1 is received therein first. The inner wall 202 of the brewing chamber 201 has a shape that substantially corresponds to the outer surface of the side wall 2 of the cup 1.

In figure 3a, the capsule 100 is partially inserted in the brewing chamber 201 along an insertion direction (I). In this configuration, the stacking notches 9 of the cup 1 are on the onset of coming into contact with end portions 204 of the inner wall 202 of the brewing chamber 201.

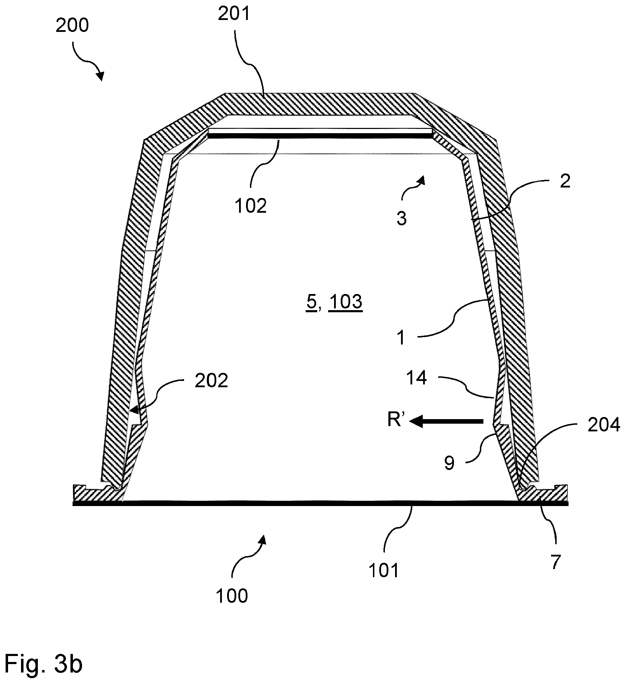

In figure 3b, the capsule 100 has been inserted further in the brewing chamber 201. The stacking notches 9 of the cup 1 have been deformed in a radially inward direction (R'), due to their interaction with the end portions 204 of the inner wall 202 of the brewing chamber 201.

The stacking notches 9 have thus been deformed towards their deformed state and no longer outwardly protrude from the side wall 2 of the cup 1. In the deformed state, the stacking notches 9 are substantially flush with the side wall 2 and with the inner wall 202 of the brewing chamber 201.

In the present embodiment, the deformation of the stacking notches 9 has caused portions of the side wall 2, amongst which are the nominal portions 10 in between adjacent stacking notches 9, to inwardly deform.

In figure 3c, the cup 1 is displayed in its deformed state. In particular, portions 14 of the side wall 2 that are situated adjacent the step surfaces 12 of the stacking notches 9, seen towards the bottom end 3 of the cup 1, have been deformed to a large extent.

In the present embodiment, the stacking notches 9 themselves are relatively rigid compared to portions of the side wall 2 that surround the stacking notches 9. The stacking notches 9 therefore have not been significantly deformed by themselves.

In alternative embodiments of the cup, the stacking notches may be less rigid and may deform themselves as well, for example by means of a buckling deformation. The stacking notches may even be so flexible, that only they would deform and that the surrounding portions of the side wall would remain intact.

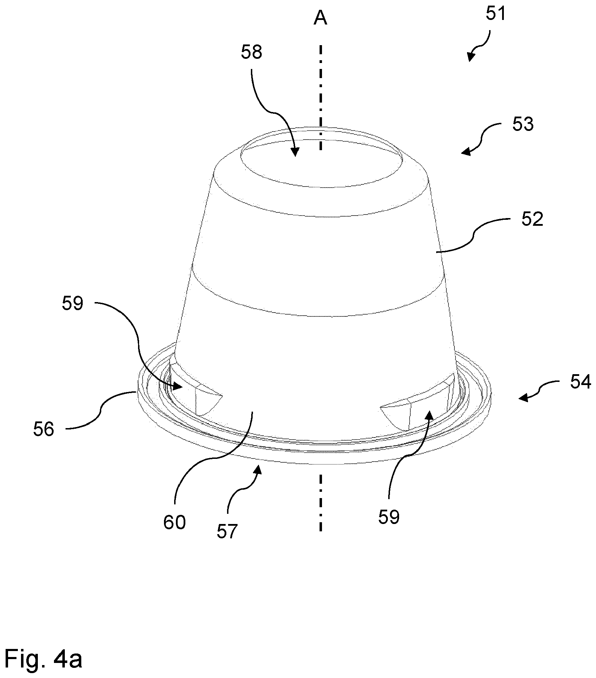

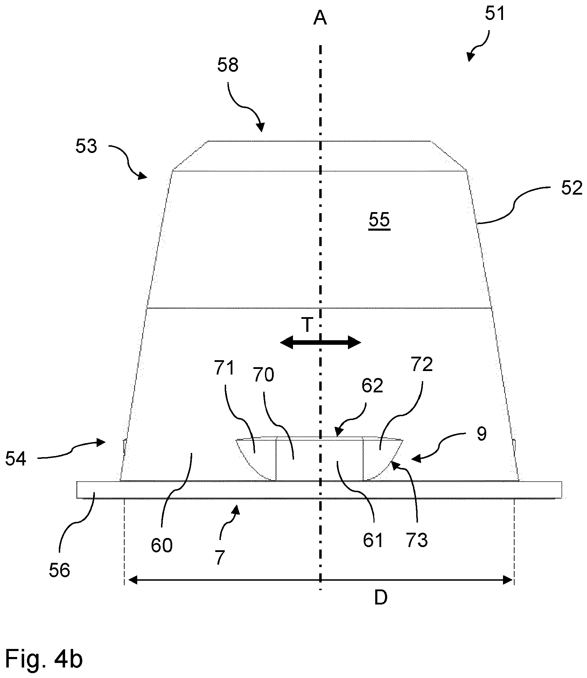

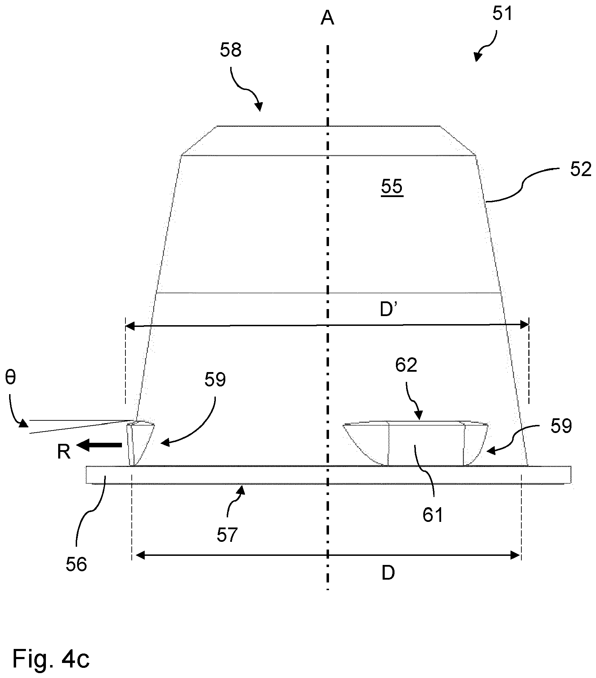

In figures 4A, 4B and 4C, another embodiment of the cup according to the present invention is displayed, to which is referred with reference numeral 51. The cup 51 comprises a frustoconical side wall 52 that encircles a central axis (A) of the frustoconical shape and a flange 56 that is disposed at a top end 54 of the cup 51. The cup 51 comprises an opening 57, which is defined by the flange 56 and which is configured to provide access to an interior 55 of the cup 51. At an opposing bottom end 53 of the 51, a second opening 58 is provided in the cup 51, also configured to provide access to the interior 55 of the cup 51.

The side wall 52 of the cup 51 comprises three stacking notches 59, which protrude radially outwards with respect to a nominal portion 60 of the side wall 52. The stacking notches 59 comprise a first side 71 and a second side 72, which are located opposite to each other.

The stacking notches 59 each have an outer surface 61 that faces away in a radially outward direction (R). The outer surfaces 61 are set at an angle with respect to the central axis (A) and at an angle with respect to the radially outward direction (R), such that a circumference of the cup 51, around the notches 59, widens with increasing distance from the flange 56. In the present embodiment, the notches 59 widen at an angle of 4° with respect to the central axis (A) of the cup 51.

Each of the stacking notches 59 further comprises a step surface 62, which faces away from the flange 56 and which faces towards the bottom end 53 of the cup 51. The step surfaces 62 are set at an angle (θ) with respect to a plane parallel to the flange 56, as is best displayed in figure 4c. In this embodiment, the angle (θ) is relatively small, in the range between 0° and 20°, for example between 1° and 10°, and may result in more convenient deformation of the notches 59 and for a lower required radially inward force.

In figure 4b, the cup 51 is shown in a front view, in a direction that is anti-parallel to the radially outward direction (R). Both sides 71, 72 of the notch 59 have a tapered shape, comprising a respective curvature at a top end 73 of the notch 59, opposite to the step surface 62. The sides 71, 72 taper from being relatively wide towards being relatively narrow next to the nominal portions 60 of the side wall 52. The top end 73 of the notch 59 has a tapered shape at the sides 71, 72.

It is displayed in figure 4b that the step surface 62 of the notch 59 is formed by a lower surface of the first side 71, of the second side 72 and of a central portion 70 of the notch 59, located in between the sides 71, 72. The parts of the step surface 62 that are formed by the sides 71, 72 thereby extend parallel to each other.

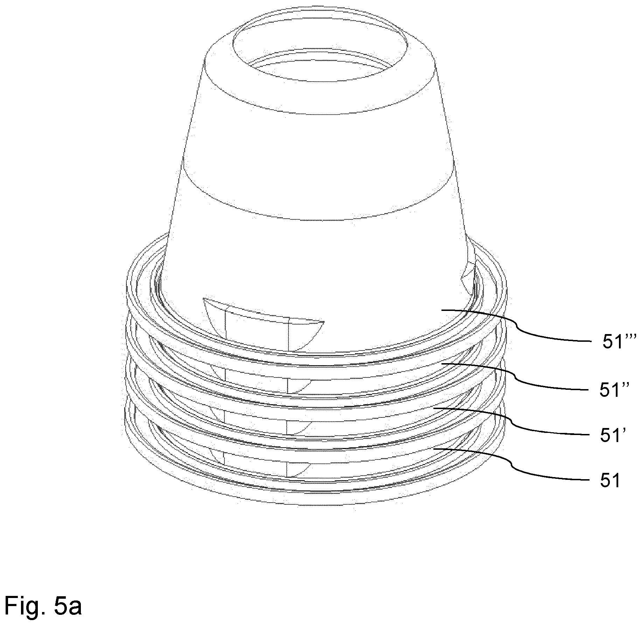

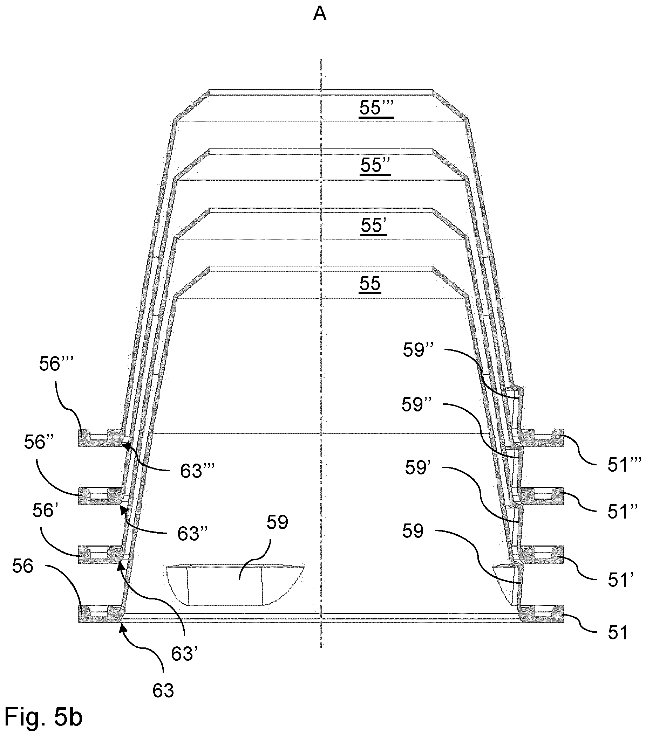

The opening 57 at the top end 54 of the cup 51 has a diameter (D) that is smaller than a diameter (D') between the stacking notches 59 of the cup 51, as is displayed in figure 4c. When the cups 51 are stacked, as is schematically displayed in figures 5a and 5b, the flange 56 of an upper cup comes to rest on the step surfaces 62 of the stacking notches 59 of a lower cup. The bottom end 53 of a lower cup is thereby arranged in an interior 55 of an upper cup, extending through the opening 57 in the flange 56 of the upper cup.

In figure 5, four cups 51 are displayed, being in a stacked configuration on top of each other. In this stacked configuration, the stacked cups 51 contact each other between adjacent flanges and stacking notches, but there will be no contact between the side walls 52 of the stacked cups 51. As such, large frictional forces between the side walls 52 of the cups 51 are prevented, so that the unstacking of the cups 51 may be more convenient.

The cups 51 in figure 5 each have a flange 56 that comprises an annular recess 63, which faces towards the opening 57 that is defined by the flange 56. The annular recess 63 is aligned concentrically with the flange 56 and with the opening 57 that is defined in the flange 56. The annular recess 63 has a diameter (D") that is larger than the diameter (D) of the opening 57. The diameter (D') between the outer surfaces 61 of the stacking notches 59 is larger than the diameter (D) of the opening 57 in the cup 51, such that an upper cup 51' rests with its flange 56' on the step surfaces 62 of the stacking notches 59 of the lower cup 51. Furthermore, the diameter (D') between the outer surfaces 61 of the stacking notches 59 is smaller than the diameter (D") of the annular recess 63, such that, upon stacking of the cups, the step surface 62 of the lower cup 51 falls within the annular recess 63' of the upper cup 51'.

## Claims

1. Stackable cup (1, 51) for producing a beverage capsule (100), comprising:
- a side wall (2, 52), extending between a bottom end (3, 53) and a top end (4, 54),
- a flange (6, 56), which is arranged at the top end (4, 54) of the side wall (2, 52), and
- a plurality of deformable stacking notches (9, 59), which outwardly protrude from an outer surface of the side wall (2, 52),
wherein the side wall (2, 52) defines an interior (5, 55) of the cup (1, 51), and
wherein the flange (6, 56) defines an opening (7, 57) towards the interior (5, 55) of the cup (1, 51),
**characterized in that** the notches (9, 59) are inwardly deformable to a deformed state, upon introduction of a radially inward force, and wherein the notches (9, 59) are, in the deformed state, substantially flush with the outer surface of the side wall (2, 52).

2. Cup (1, 51) according to claim 1, wherein the notches (9, 59) are adapted to be inwardly deformed by an inner wall (202) of a brewing chamber (201) of a brewing apparatus (200), and
wherein the notches (9, 59) preferably have an outer surface (11) that projects away with respect to the outer surface of the side wall (2, 52) in a radially outward direction (R).

3. Cup (1, 51) according to claim 2, wherein the notches (9, 59) have a wedge-like shape, and wherein the outer surface (11) of the notches (9, 59) is, with increasing distance from the flange (6, 56), set further away from the outer surface of the side wall (2, 52),
wherein preferably each of the notches (9, 59) comprises a step surface (12), which faces away from the flange (6, 56) and which is set at an angle (θ) with respect to a plane of the flange (6, 56), wherein the angle (θ) may be in the range between -10° and 10°.

4. Cup (1, 51) according to any of the preceding claims, wherein the side wall (2, 52) has an at least partial frustoconical shape, and wherein the notches (9, 59) are preferably provided at the frustoconical portion of the side wall (2, 52), and
wherein preferably an outer diameter (D') of the cup (1, 51), around the notches (9, 59), is substantially constant over the length of the notches (9, 59).

5. Cup (1, 51) according to any of the preceding claims, wherein an outer diameter (D') of the cup (1, 51), around the notches (9, 59) and adjacent the step surfaces (12), is substantially larger than a diameter (D) of the opening (7, 57).

6. Cup (1, 51) according to any of the preceding claims, wherein the flange (6, 56) comprises an annular recess (13), which faces towards the opening (7, 57) and which is configured to rest on notches of another cup when the cup (1, 51) is stacked on this other cup,
wherein an outer diameter ((D') of the cup (1, 51), around the notches (9, 59) and adjacent the step surfaces (12), is preferably substantially smaller than a diameter (D") of the annular recess (13).

7. Cup (1, 51) according to any of the preceding claims, wherein the notches (9, 59) are evenly distributed around the circumference of the side wall (2, 52).

8. Cup (1, 51) according to any of the claims 2 - 7, wherein the each of the notches (9, 59) comprises two sides (71, 72), which are located opposite to each other, and wherein the sides (71, 72) have a curved shape and taper towards nominal portions (60) of the side wall (2, 52).

9. Cup (1, 51) according to any of the preceding claims, comprising three notches (9, 59), which are evenly distributed around the circumference of the side wall (2, 52), being spaced at 120° from each other.

10. Cup (1, 51) according to claim 9, wherein each of the stacking notches (9, 59) has a width in a tangential direction (T),
wherein nominal portions (60) of the side wall (2, 52), in between the notches (9, 59), have a width in the tangential direction (T), and
wherein the width of the nominal portions (60) is larger than the width of the notches (9, 59), and wherein preferably all notches (9, 59) have a same width and wherein all nominal portions (60) have a same width as well.

11. Method for stacking cups (1, 51), comprising the steps of:
- providing a first stackable cup (1') according to any of the preceding claims,
- providing a second stackable cup (1) according to any of the preceding claims, and
- stacking the first cup (1') on the second cup (1) in order to form a stacked configuration,
wherein, in the stacked configuration of the cups (1, 1'):
• the side wall (2) of the second cup is arranged at least partially within the interior (5') of the first cup (1'), and
• the flange (6') of the first cup (1') rests on the notches (9) of the second cup (1).

12. Method according to claim 11, wherein the flange (6') of the first cup (1') comprises an annular recess (13'), which faces towards the opening (7') of the first cup (1'), and wherein the annular recess (13') of the first cup (1') rests, in the stacked configuration of the cups (1, 1'), on the notches (9) of the second cup (1).

13. Capsule (100) for brewing a beverage, comprising:
- a stackable cup (1, 51) according to any of the claims 1 - 10,
- a beverage ingredient (103), which is arranged in the interior (5, 55) of the cup (1, 51), and
- a foil (101), which is arranged on the flange (6, 56) and which is configured to cover the opening (7, 57) of the cup (1, 51) and to seal the interior (5, 55) of the cup (1, 51).

14. Method for the manufacturing of a capsule (100), comprising the steps of:
- providing at least two stackable cups (1, 51) according to any of the claims 1 - 10, which are in a stacked configuration,
- unstacking at least one cup (1, 51) of the stacked cups (1, 51),
- filling the interior (5, 55) of the at least one cup (1, 51) with a beverage ingredient (103), and
- arranging a foil (101) on the flange (6, 56) of the at least cup (1, 51) to cover the opening (7, 57) of the at least one cup (1, 51) and to seal the interior (5, 55) of the at least one cup (1, 51).

15. Brewing assembly, comprising:
- a brewing apparatus (200), comprising a brewing chamber (201), and
- a capsule (100) according to claim 13,
wherein the brewing chamber (201) has an inner wall (202) that substantially corresponds to the side wall (2, 52) of the cup (1, 51),
wherein the brewing chamber (201) is configured to receive the capsule (100) for brewing a beverage, and
wherein the inner wall (202) of the brewing chamber (201) is, upon introduction of the capsule (100) in the brewing chamber (201), configured to inwardly deform the notches (9, 59) of the cup (1, 51) to the deformed state.

## Patentansprüche

1. Stapelbarer Becher (1, 51) zum Herstellen einer Getränkekapsel (100), umfassend:
eine Seitenwand (2, 52), die sich zwischen einem unteren Ende (3, 53) und einem oberen Ende (4, 54) erstreckt,
einen Flansch (6, 56), der an dem oberen Ende (4, 54) der Seitenwand (2, 52) angeordnet ist, und
eine Vielzahl verformbarer Stapel-Einkerbungen (9, 59), die von einer Außenfläche der Seitenwand (2, 52) nach außen vorstehen, wobei die Seitenwand (2, 52) einen Innenraum (5, 55) des Bechers (1, 51) bildet und der Flansch (6, 56) eine Öffnung (7, 57) zu dem Innenraum (5, 55) des Bechers (1, 51) hin bildet, **dadurch gekennzeichnet, dass** die Einkerbungen (9, 59) nach innen in einen verformten Zustand verformt werden können, wenn eine radial nach innen gerichtete Kraft eingeleitet wird, und die Einkerbungen (9, 59) in dem verformten Zustand im Wesentlichen bündig mit der Außenfläche der Seitenwand (2, 52) sind.

2. Becher (1, 51) nach Anspruch 1, wobei die Einkerbungen (9, 59) so eingerichtet sind, dass sie durch eine Innenwand (202) einer Brühkammer (201) einer Brühvorrichtung (200) nach innen verformt werden, und die Einkerbungen (9, 59) vorzugsweise eine Außenfläche (11) aufweisen, die von der Außenfläche der Seitenwand (2, 52) weg radial nach außen gerichtet (R) vorsteht.

3. Becher (1, 51) nach Anspruch 2, wobei die Einkerbungen (9, 59) eine keilartige Form haben, und die Außenfläche (11) der Einkerbungen (9, 59) mit zunehmendem Abstand von dem Flansch (6, 56) weiter von der Außenfläche der Seitenwand (2, 52) weg angeordnet sind, und vorzugsweise jede der Einkerbungen (9, 59) eine abgestufte Fläche (12) aufweist, die von dem Flansch (6, 56) weg gerichtet ist und die in einem Winkel (θ) in Bezug auf eine Ebene des Flansches (6, 56) angeordnet ist, wobei der Winkel (θ) in dem Bereich zwischen -10° und 10° liegen kann.

4. Becher (1, 51) nach einem der vorangehenden Ansprüche, wobei die Seitenwand (2, 52) eine wenigstens teilweise kegelstumpfartige Form hat, und die Einkerbungen (9, 59) vorzugsweise an dem kegelstumpfförmigen Abschnitt der Seitenwand (2, 52) vorhanden sind, und vorzugsweise ein Außendurchmesser (D') des Bechers (1, 51) um die Einkerbungen (9, 59) herum über die Länge der Einkerbungen (9, 59) im Wesentlichen konstant ist.

5. Becher (1, 51) nach einem der vorangehenden Ansprüche, wobei ein Außendurchmesser (D') des Bechers (1, 51) um die Einkerbungen (9, 59) herum und an die abgestuften Flächen (12) angrenzend im Wesentlichen größer ist als ein Durchmesser (D) der Öffnung (7, 57).

6. Becher (1, 51) nach einem der vorangehenden Ansprüche, wobei der Flansch (6, 56) eine ringförmige Aussparung (13) umfasst, die der Öffnung (7, 57) zugewandt und so ausgeführt ist, dass sie auf Einkerbungen eines anderen Bechers aufliegt, wenn der Becher (1, 51) auf diesen anderen Becher gestapelt ist, und ein Außendurchmesser (D') des Bechers (1, 51) um die Einkerbungen (9, 59) herum und an die abgestuften Flächen (12) angrenzend vorzugsweise im Wesentlichen kleiner ist als ein Durchmesser (D") der ringförmigen Aussparung (13).

7. Becher (1, 51) nach einem der vorangehenden Ansprüche, wobei die Einkerbungen (9, 59) gleichmäßig um den Umfang der Seitenwand (2, 52) herum verteilt sind.

8. Becher (1, 51) nach einem der Ansprüche 2 - 7, wobei jede der Einkerbungen (9, 59) zwei einander gegenüberliegend angeordnete Seiten (71, 72) umfasst und die Seiten (71, 72) eine gekrümmte Form haben und sich zu Nenn-Abschnitten (60) der Seitenwand (2, 52) hin verjüngen.

9. Becher (1, 51) nach einem der vorangehenden Ansprüche, der drei Einkerbungen (9, 59) umfasst, die gleichmäßig um den Umfang der Seitenwand (2, 52) herum verteilt sind und um 120° voneinander beabstandet sind.

10. Becher (1, 51) nach Anspruch 9, wobei jede der Stapel-Einkerbungen (9, 59) eine Breite in einer tangentialen Richtung (T) hat, Nenn-Abschnitte (60) der Seitenwand (2, 52) zwischen den Einkerbungen (9, 59) eine Breite in der tangentialen Richtung (T) haben, die Breite der Nenn-Abschnitte (60) größer ist als die Breite der Einkerbungen (9, 59) und vorzugsweise alle Einkerbungen (9, 59) eine gleiche Breite haben und auch alle Nenn-Abschnitte (60) eine gleiche Breite haben.

11. Verfahren zum Stapeln von Bechern (1, 51), das die folgenden Schritte umfasst:
Bereitstellen eines ersten stapelbaren Bechers (1') nach einem der vorangehenden Ansprüche,
Bereitstellen eines zweiten stapelbaren Bechers (1) nach einem der vorangehenden Ansprüche, und
Stapeln des ersten Bechers (1') auf den zweiten Becher (1), um eine gestapelte Anordnung herzustellen,
wobei in der gestapelten Anordnung der Becher (1, 1'):
• die Seitenwand (2) des zweiten Bechers wenigstens teilweise innerhalb des Innenraums (5') des ersten Bechers (1') angeordnet ist, und
• der Flansch (6') des ersten Bechers (1') auf den Einkerbungen (9) des zweiten Bechers (1) aufliegt.

12. Verfahren nach Anspruch 11, wobei der Flansch (6') des ersten Bechers (1') eine ringförmige Aussparung (13') umfasst, die der Öffnung (7') des ersten Bechers (1') zugewandt ist, und die ringförmige Aussparung (13') des ersten Bechers (1') in der gestapelten Anordnung der Becher (1, 1') auf den Einkerbungen (9) des zweiten Bechers (1) aufliegt.

13. Kapsel (100) zum Brühen eines Getränks, umfassend:
einen stapelbaren Becher (1,51) nach einem der Ansprüche 1-10,
eine Getränkezutat (103), die in dem Innenraum (5, 55) des Bechers (1, 51) angeordnet ist, und
eine Folie (101), die auf dem Flansch (6, 56) angeordnet und so ausgeführt ist, dass sie die Öffnung (7, 57) des Bechers (1, 51) abdeckt und den Innenraum (5, 55) des Bechers (1, 51) abdichtet.

14. Verfahren zum Herstellen einer Kapsel (100), das die folgenden Schritte umfasst:
Bereitstellen von wenigstens zwei stapelbaren Bechern (1, 51) nach einem der Ansprüche 1 - 10, die sich in einer gestapelten Anordnung befinden,
Abnehmen des wenigstens einen Bechers (1, 51) von dem Stapel der Becher (1, 51), Füllen des Innenraums (5, 55) des wenigstens einen Bechers (1, 51) mit einer Getränkezutat (103) und
Anordnen einer Folie (101) an dem Flansch (6, 56) des wenigstens einen Bechers (1, 51), um die Öffnung (7, 57) des wenigstens einen Bechers (1, 51) abzudecken und den Innenraum (5, 55) des wenigstens einen Bechers (1, 51) abzudichten.

15. Brüh-Anordnung, die umfasst:
eine Brühvorrichtung (200), die eine Brühkammer (201) umfasst, und
eine Kapsel (100) nach Anspruch 13,
wobei die Brühkammer (201) eine Innenwand (202) aufweist, die im Wesentlichen der Seitenwand (2, 52) des Bechers (1, 51) entspricht,
wobei die Brühkammer (201) so ausgeführt ist, dass sie die Kapsel (100) aufnimmt, um ein Getränk zu brühen, und die Innenwand (202) der Brühkammer (201) so ausgeführt ist, dass sie die Einkerbungen (9, 59) des Bechers (1, 51) bei Einführung der Kapsel (100) in die Brühkammer (201) in den verformten Zustand nach innen verformt.

## Revendications

1. Gobelet (1, 51) empilable pour produire une capsule de boisson (100), comprenant :
- une paroi latérale (2, 52), s'étendant entre une extrémité inférieure (3, 53) et une extrémité supérieure (4, 54),
- une collerette (6, 56), qui est disposée à l'extrémité supérieure (4, 54) de la paroi latérale (2, 52), et
- une pluralité d'encoches (9, 59) d'empilage déformables, qui font saillie vers l'extérieur depuis une surface extérieure de la paroi latérale (2, 52),
dans lequel la paroi latérale (2, 52) définit un intérieur (5, 55) du gobelet (1, 51), et
dans lequel la collerette (6, 56) définit une ouverture (7, 57) vers l'intérieur (5, 55) du gobelet (1, 51),
**caractérisé en ce que** les encoches (9, 59) sont déformables vers l'intérieur jusqu'à un état déformé, lors de l'introduction d'une force radiale vers l'intérieur, et dans lequel les encoches (9, 59) sont, à l'état déformé, sensiblement à fleur de la surface extérieure de la paroi latérale (2, 52).

2. Gobelet (1, 51) selon la revendication 1, dans lequel les encoches (9, 59) sont adaptées pour être déformées vers l'intérieur par une paroi interne (202) d'une chambre d'infusion d'un appareil d'infusion (200), et
dans lequel les encoches (9, 59) ont de préférence une surface extérieure (11) qui fait saillie par rapport à la surface extérieure de la paroi latérale (2, 52) dans une direction radialement extérieure (R).

3. Gobelet (1, 51) selon la revendication 2, dans lequel les encoches (9, 59) ont une forme de coin, et dans lequel la surface extérieure (11) des encoches (9, 59) est, avec une distance croissante de la collerette (6, 56), plus éloignée de la surface extérieure de la paroi latérale (2, 52),
dans lequel, de préférence, chacune des encoches (9, 59) comprend une surface étagée (12), qui est orientée à l'opposé de la collerette (6, 56) et qui est placée à un angle (θ) par rapport à un plan de la collerette (6, 56), dans lequel l'angle (θ) peut être dans la plage entre -10° et 10°.

4. Gobelet (1, 51) selon l'une quelconque des revendications précédentes, dans lequel la paroi latérale (2, 52) a une forme au moins partiellement tronconique, et dans lequel les encoches (9, 59) sont de préférence prévues au niveau de la partie tronconique de la paroi latérale (2, 52), et
dans lequel, de préférence, un diamètre extérieur (D') du gobelet (1, 51), autour des encoches (9, 59), est sensiblement constant sur la longueur des encoches (9, 59).

5. Gobelet (1, 51) selon l'une quelconque des revendications précédentes, dans lequel un diamètre extérieur (D') du gobelet (1, 51), autour des encoches (9, 59) et adjacent aux surfaces étagées (12), est sensiblement supérieur à un diamètre (D) de l'ouverture (7, 57).

6. Gobelet (1, 51) selon l'une quelconque des revendications précédentes, dans lequel la collerette (6, 56) comprend un évidement annulaire (13), qui est orienté vers l'ouverture (7, 57) et qui est configuré pour reposer sur des encoches d'un autre gobelet lorsque le gobelet (1, 51) est empilé sur cet autre gobelet,
dans lequel un diamètre extérieur (D') du gobelet (1, 51), autour des encoches (9, 59) et adjacent aux surfaces étagées (12), est de préférence sensiblement inférieur à un diamètre (D") de l'évidement annulaire (13).

7. Gobelet (1, 51) selon l'une quelconque des revendications précédentes, dans lequel les encoches (9, 59) sont réparties uniformément sur la circonférence de la paroi latérale (2, 52).

8. Gobelet (1, 51) selon l'une quelconque des revendications 2 à 7, dans lequel chacune des encoches (9, 59) comprend deux côtés (71, 72), qui sont situés à l'opposé l'un de l'autre, et
dans lequel les côtés (71, 72) ont une forme incurvée et s'effilent vers des parties nominales (60) de la paroi latérale (2, 52).

9. Gobelet (1, 51) selon l'une quelconque des revendications précédentes, comprenant trois encoches (9, 59), qui sont réparties uniformément sur la circonférence de la paroi latérale (2, 52), en étant espacées de 120° les unes des autres.

10. Gobelet (1, 51) selon la revendication 9, dans lequel chacune des encoches (9, 59) d'empilage a une largeur dans une direction tangentielle (T),
dans lequel des parties nominales (60) de la paroi latérale (2, 52), entre les encoches (9, 59), ont une largeur dans la direction tangentielle (T), et
dans lequel la largeur des parties nominales (60) est plus grande que la largeur des encoches (9, 59), et dans lequel de préférence toutes les encoches (9, 59) ont une même largeur et dans lequel toutes les parties nominales (60) ont également une même largeur.

11. Procédé d'empilage de gobelets (1, 51), comprenant les étapes suivantes :
- fournir un premier gobelet (1') empilable selon l'une quelconque des revendications précédentes,
- fournir un deuxième gobelet (1) empilable selon l'une quelconque des revendications précédentes, et
- empiler le premier gobelet (1') sur le deuxième gobelet (1) afin de former une configuration empilée,
dans lequel, dans la configuration empilée des gobelets (1, 1') :
- la paroi latérale (2) du deuxième gobelet est disposée au moins partiellement à l'intérieur (5') du premier gobelet (1'), et
- la collerette (6') du premier gobelet (1') repose sur les encoches (9) du deuxième gobelet (1).

12. Procédé selon la revendication 11, dans lequel la collerette (6') du premier gobelet (1') comprend un évidement annulaire (13'), qui fait face à l'ouverture (7') du premier gobelet (1'), et
dans lequel l'évidement annulaire (13') du premier gobelet (1') repose, dans la configuration empilée des gobelets (1, 1'), sur les encoches (9) du deuxième gobelet (1).

13. Capsule (100) pour l'infusion d'une boisson, comprenant :
- un gobelet (1, 51) empilable selon l'une quelconque des revendications 1 à 10,
- un ingrédient de boisson (103), qui est disposé à l'intérieur (5, 55) du gobelet (1, 51), et
- une feuille (101), qui est disposée sur la collerette (6, 56) et qui est configurée pour couvrir l'ouverture (7, 57) du gobelet (1, 51) et pour sceller l'intérieur (5, 55) du gobelet (1, 51).

14. Procédé de fabrication d'une capsule (100), comprenant les étapes consistant à :
- fournir au moins deux gobelets (1, 51) empilables selon l'une quelconque des revendications 1 à 10, qui sont dans une configuration empilée,
- désempiler au moins un gobelet (1, 51) des gobelets (1, 51) empilés,
- remplir l'intérieur (5, 55) de l'au moins un gobelet (1, 51) avec un ingrédient de boisson (103), et
- disposer une feuille (101) sur la collerette (6, 56) du au moins un gobelet (1, 51) pour couvrir l'ouverture (7, 57) du au moins un gobelet (1, 51) et pour sceller l'intérieur (5, 55) du au moins un gobelet (1, 51).

15. Ensemble d'infusion, comprenant :
- un appareil d'infusion (200), comprenant une chambre d'infusion (201), et
- une capsule (100) selon la revendication 13,
dans lequel la chambre d'infusion (201) a une paroi interne (202) qui correspond sensiblement à la paroi latérale (2, 52) du gobelet (1, 51),
dans lequel la chambre d'infusion (201) est configurée pour recevoir la capsule (100) pour infuser une boisson, et
dans lequel la paroi interne (202) de la chambre d'infusion (201) est, lors de l'introduction de la capsule (100) dans la chambre d'infusion (201), configurée pour déformer vers l'intérieur les encoches (9, 59) du gobelet (1, 51) jusqu'à l'état déformé.
